# EUROPEAN PATENT SPECIFICATION

(11) **EP 0 513 695 B1**
(45) Date of publication and mention of the grant of the patent: **21.07.1999**
(21) Application number: 92107820.0
(22) Date of filing: 08.05.1992
(51) Int. Cl.: H04M 1/72

(54) **Cordless telephone system**
Schnurloses Telefonsystem
Système de téléphone sans fil

(30) Priority: 13.05.1991 JP 10738991; 29.05.1991 JP 12622791
(43) Date of publication of application: 19.11.1992
(73) Proprietor: SONY CORPORATION, Tokyo (JP)
(72) Inventor: Maeda, Satoru, Shinagawa-ku, Tokyo (JP)
(74) Representative: Melzer, Wolfgang, Dipl.-Ing.

(56) References cited:
- EP-A- 0 388 034
- DE-A- 3 738 829
- GB-A- 2 166 622
- US-A- 4 955 050
- PATENT ABSTRACTS OF JAPAN vol. 11, no. 51 (E-480)20 September 1986 & JP-A-61 212 930 ( OKI ELECTRIC )

## Description

### BACKGROUND OF THE INVENTION

### Field of the Invention:

The present invention relates generally to telephone systems and, more particularly to a novel telephone system using a digital cordless telephone.

### Description of the Related Art:

Recently, many digital cordless telephones and applications thereof have been proposed so far. The format of digital cordless telephone is fundamentally similar to those of home cordless telephones now commercially available.

More specifically, the digital cordless telephone comprises a base station coupled to a public switched telephone network (PSTN) and a cordless handset which can communicate with this base station in a limited service area.

It is expected that the digital cordless telephones wipe out the cordless telephones now widely used.

One of important advantages of the digital cordless telephone lies in that the user can freely carry the cordless handset outdoors and effect an outgoing call at a telepoint station for thereby making a telephone conversation. According to the digital cordless telephone, if a position of the cordless telephones is registered, then the user can make an incoming operation.

When the user carries out the outgoing operation through the telepoint station, an identification (ID) code of the cordless handset also is transmitted. Many proposals are known, in which it is determined on the basis of the ID transmitted whether or not the cordless telephone is a registered cordless telephone. Further, another proposal is considered such that, on the basis of the ID code, those who have to pay the charge for telephone call can be recognized after the type of the cordless telephone is determined.

Further, in a communication system with a moving body such as a mobile telephone system, a portable telephone system or the like, a telephone of cellular system is generally utilized. According to the cellular system telephone, a service area is divided into a plurality of cells and a base station is provided at every cell for thereby enabling the base station and the moving body to communicate with each other. In this case, each moving body side performs the transmission and reception between it and the base station and receives a control signal to thereby detect a base station of cell with which it can communicate.

In the above-mentioned digital cordless telephone, a main function of the handset is an outgoing operation at the telepoint. If the handset performs an incoming operation, then the position registration must be carried out. There is then the disadvantage that the user must carry out the cumbersome position registration.

Furthermore, in a cellular system telephone which can perform the incoming operation without the position registration, the position of the mobile station (terminal) must be constantly calculated and registered by the telephone network, which cannot provide a simplified and inexpensive telephone system.

Document EP 0 510 630 A2, which represents prior art according to Art. 54(3)EPC, discloses a telephone system, wherein a base station comprises an ID data memory storing IDs of a plurality of handsets which are assigned to the base station. The ID data are used for controlling outgoing calls of the handsets. In case the base station receives a connection request signal from one of the handsets, the base station reads the ID assigned to the respective handset out of the ID data memory and compares it with the ID data included in the signal received from the handset. If the two ID data are identical, the base station sends a channel designation signal to the handset, otherwise the base station rejects the connection request signal. However, as regards an incoming call of a handset, the use of identification data stored in the ID data memory is not described in this document.

From document GB 2166 622 A it is known to call a predetermined handset via a base station of a telephone system, wherein a ringing current is sent along with the respective incoming call to the base station, and wherein the ringing current is detected by a ring detector. Thereafter, the ring detector signals to a control unit which consults a look-up table to convert the dialed number to a code for the desired handset. Furthermore, the control unit checks that the frequency channel for the desired handset is free and, if so, a communication path between the base station and te desired handset is established.

### OBJECTS AND SUMMARY OF THE INVENTION

It is an object of the present invention to provide a novel telephone system in which an incoming operation can be effected within a limited service area without registering the position of a cordless handset.

In particular, it is an object of the present invention to provide a novel telephone system in which a desired information can be transmitted to a cordless handset within a limited service area even when the cordless handset is not in use.

According to the present invention, the above objects are achieved by a telephone system as defined in claim 1. The dependent claims define advantageous and preferred embodiments of the present invention.

A telephone system according to the present invention comprises a base station coupled to a public switched telephone network (PSTN) and a cordless handset which can effect an outgoing operation and an incoming operation via the base station. An ID code of the cordless handset is registered in the base station together with a subscriber's number.

When the handset is called from the outside, the base station thereof is called first. Then, the base station requests the subscriber's number to the caller. When the subscriber's number requested is transmitted to the base station, then the base station searches the ID code of the handset from the subscriber's number and calls the handset corresponding to this ID code. In this way, the person who makes an outgoing call can communicate with the person having the handset.

Further, the base station can transmit a variety of messages to the handset. Also in this case, the base station can search the ID code of the handset from the subscriber's number and transmit a desired message to only a particular handset.

### BRIEF DESCRIPTION OF THE DRAWINGS

A better understanding of other objects, features, and advantages of the present invention can be gained from a consideration of the following detailed description of an illustrative embodiment thereof, in conjunction with the figures of the accompanying drawings, in which:
FIG. 1 is a block diagram showing an example of a digital cordless handset used in a telephone system according to the present invention;
FIG. 2 is a block diagram showing an embodiment of a telephone system according to the present invention; and
FIG. 3 is a block diagram showing an example of a base station utilized in the telephone system according to the present invention.

### DETAILED DESCRIPTION OF THE PREFERRED EMBODIMENT

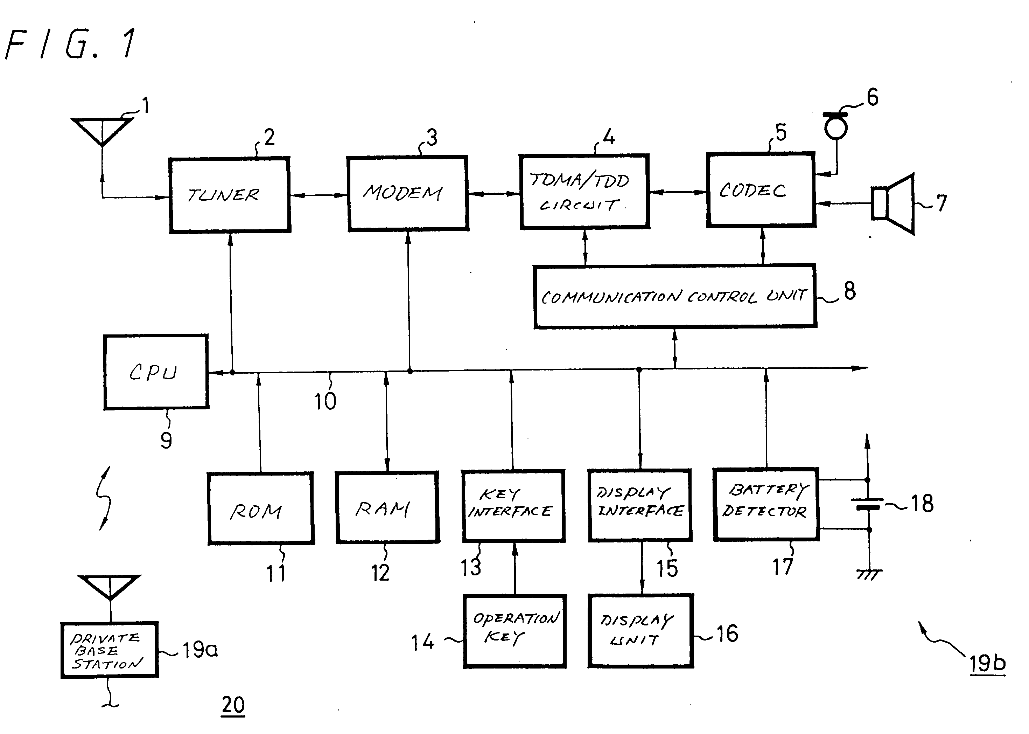

FIG. 1 of the accompanying drawings shows in block form an example of a cordless handset utilized in the digital cordless telephone system according to the present invention.

As shown in FIG. 1, a cordless handset, which is generally depicted by reference numeral 19b, comprises an antenna 1, a tuner 2, a modulator and demodulator (i.e., MODEM) 3, a time division multiple access (TDMA)/time division duplex (TDD) circuit 4 and a coder and decoder (CODEC) 5.

Further, the cordless handset 19b comprises a microphone 6 for transmitting a telephone conversation, a speaker 7 for receiving a telephone conversation, a communication control unit 8, a central processing unit (CPU) 9, a bus 10, a read-only memory (ROM) 11, a random access memory (RAM) 12, a key interface 13, an operation key 14, a display interface 15, a display unit 16, a battery detector circuit 17 and a battery 18.

Operation of the cordless handset 19b either when it transmits a signal to a private base station 19a or when it receives a signal from the private base station 19a will be described.

First, operation of the cordless handset 19b when it receives a frequency-modulated signal (FM signal) transmitted from the private base station 19a will be described.

The FM signal transmitted from the private base station 19a is received at the antenna 1 of the cordless handset 19b, and the FM signal received at the antenna 1 is supplied to the tuner 2. The FM signal supplied to the tuner 2 from the antenna 1 is converted into a first intermediate frequency signal and then converted into a second intermediate frequency signal. The second intermediate frequency signal is supplied from the tuner 2 to the MODEM 3, in which it is FM-demodulated to provide a digital audio signal. The digital audio signal is supplied through the TDMA/TDD circuit 4 to the CODEC 5, in which it is reconverted to provide the original analog signal. This analog audio signal is supplied to the speaker 7 and emanated from the speaker 7 as a voice.

Operation in which the cordless handset 19b is utilized when it transmits an FM signal to the private base station 19a will be described.

A voice picked up by the microphone 6 is supplied to the CODEC 5 as an analog audio signal. The analog audio signal supplied to the CODEC 5 is converted into a digital audio signal which is then processed for TDMA/TDD system transmission by the TDMA/TDD circuit 4 under the control of the communication control unit 8. The digital audio signal thus processed is supplied to the MODEM 3. The digital audio signal supplied to the MODEM 3 is converted into an FM intermediate frequency signal and fed to the tuner 2. The FM intermediate frequency signal supplied to the tuner 2 is switched at every predetermined time slot. The FM intermediate frequency signal thus switched is frequency-converted into an FM signal, processed in a predetermined signal processing fashion and then fed to the antenna 1. Then, the FM signal is transmitted from the antenna 1 to the private base station 19a.

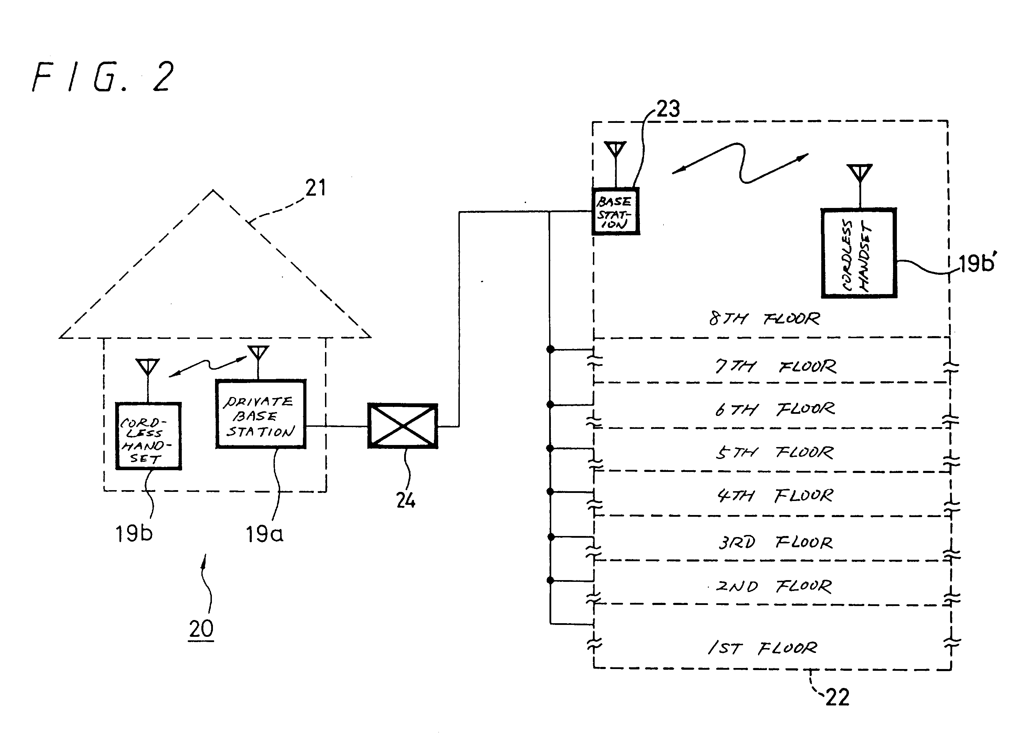

FIG. 2 shows in block form an embodiment of the digital cordless telephone system according to the present invention.

FIG. 2 shows the case such that the user makes an outgoing call by a digital cordless telephone 20 installed in a house 21, for example, to a particular user having a cordless handset 19b' in the 8th floor of a building 22. In other words, FIG. 2 shows the case such that the user in the house 21 calls the particular user having the cordless handset 19b' on the 8th floor of the building 22.

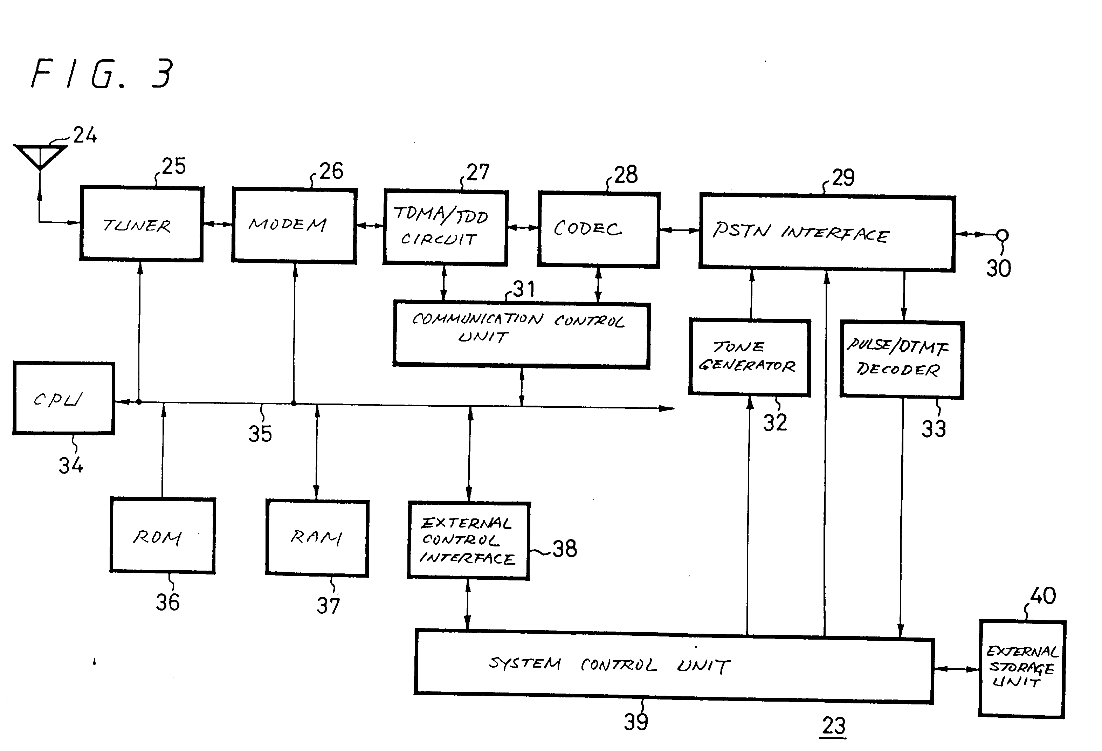

In FIG. 2, a digital cordless telephone 20 composed of the private base station 19a and the cordless handset 19b has a similar internal configuration as that of the digital cordless telephone 20 shown in FIG. 1 and the internal configuration of the cordless handset 19b' is fundamentally similar to that of the cordless handset 19b. The private base station 19a of this digital cordless telephone 20 is connected with a public switched telephone network (PSTN) 24. The PSTN 24 is connected to a base station 23 which will be described later with reference to FIG. 3.

Though not shown, the base station 23 is installed not only in the 8th floor of the building 22 but also installed on each of the first to seventh floors of the building 22.

This telephone system will be described below. According to this telephone system, the base station 23 is installed within the building 22. Companies such as department stores, golf links companies or the like having the base stations 23 installed let those who are registered in advance (e.g., members, etc.) know the telephone number and subscriber's number of the base station 23. Further, the user (hereinafter referred to as subscriber) who is informed of the telephone number and the subscriber's number of the base station 23 let other acquaintances learn the telephone number and the subscriber's number of the base station 23.

A communication process will be described below.

When a certain person who is taught from a subscriber whose subscriber's number or the like, intends to communicate with the subscriber, the certain person utilizes the digital cordless telephone 20 installed on the house 21 to transmit a telephone number of the base station 23 of the building 22 where the subscriber should be. At that time, the base station 23 responds to the incoming call automatically or in a manual fashion. When the base station 23 responds to the incoming call automatically, the base station 23 requests the caller to transmit the subscriber's number after a dial tone or the like. When the person who intends to communicate with the subscriber transmits the subscriber's number to the base station 23, it is determined by the computer in the base station 23 whether or not the subscriber's number thus transmitted is the subscriber's number registered beforehand. If it coincides with the subscriber's number registered beforehand, then the handset ID code of the subscriber stored together with the subscriber's number is added to the subscriber's number and the base station 23 makes an outgoing call to the handset 19b'. If the subscriber is in the building 22, then the handset 19b' of the subscriber emanates a ringing sound is response to the outgoing call from the base station 23. At that time, when the subscriber pushes a communication button (not shown) or the like of the handset 19b', then the person who intends to communicate with the subscriber can communicate with the subscriber via the base station 23.

Therefore, the incoming call can be received without using the cellular telephone apparatus nor registering the reception position.

The circuit arrangement of the above-mentioned base station 23 will be described with reference to FIG. 3.

Referring to FIG. 3, the base station 23 comprises an antenna 24, a tuner 25, a MODEM (modulator and demodulator) 26, a TDMA/TDD circuit 27, a decoder 28, a PSTN interface 29, a terminal 30 coupled to a PSTN (not shown), a communication control unit 31, a tone generator 32, a pulse/DTMF (dual tone multiple frequency) decoder 33, a CPU 34, a bus 35, a ROM 36, a RAM 37, an external control interface 38 and a system control unit 39.

An explanation will be given on a registration for receiving an incoming call from the outside in the building 22 and operation in which a certain user who intends to communicate with a subscriber makes an outgoing call to the subscriber in the building 22 from the house 21 shown in FIG. 2 by utilizing the digital cordless telephone 20 via the base station 23.

A registration for enabling a person to receive an incoming call in the building 22 will be described first.

A subscriber is supplied with a subscriber's number in advance. Then, the subscriber's handset 19b' carries out the outgoing call operation for the base station 23 at an arbitrary floor of the building 22, for example, within a predetermined area of the base station 23. At that time, the base station 23 is set in the handset ID registration mode. The outgoing call signal from the handset 19b' is received by the base station 23 via the antenna 24, and the signal thus received is supplied through the tuner 25 to the MODEM 26. The signal supplied to the MODEM 26 is demodulated therein and then fed to the TDMA/TDD circuit 27 under the control of the communication control unit 31. The signal from the TDMA/TDD circuit 27 is supplied to the coder/decoder (CODEC) 28, in which it is decoded thereby and then supplied through the communication control unit 31 to the bus 35.

Of the signals supplied to the bus 35, the handset ID signal is read by the CPU 34 and the handset ID signal thus read by the CPU 34 is supplied through the external control interface 38 and the system control unit 39 to an external storage unit 40, thereby being stored in a record medium (not shown) of the external storage unit 40.

Operation in which a person who intends to communicate with the subscriber calls the subscriber in the building 22 by the digital cordless telephone 20 will be described below. In this case, the telephone apparatus is not limited to the digital cordless telephone 20 and other ordinary telephone and a public telephone may be utilized with similar effects being achieved.

First, the person who wants to communicate with the subscriber calls the base station 23 in the building 22 by using the handset 19b of the digital cordless telephone 20. Then, a transmission signal from the private base station 19a of the digital cordless telephone 20 is read out by the PSTN 24 and the base station 23 in the building 22 is called by the PSTN 24. Then, the private base station 19a of the digital cordless telephone 20 is coupled to the base station 23. Thereafter, under the control of the system control unit 39 of the base station 23, an audio signal (e.g., human voice or transmission tone, etc.) representative of the request of the subscriber's number is supplied to the private base station 19a of the digital cordless telephone 20 installed in the house 21 from the tone generator 32 through the PSTN interface 29 and the PSTN 24. Further, this audio signal is transmitted from an antenna of the private base station 19a and received by the handset 19b through the antenna of the handset 19b. The person who wishes to communicate with the subscriber transmits the previously-taught subscriber's number by keys (not shown) of the handset 19b.

The subscriber's number signal thus transmitted is received at the antenna of the private base station 19a and supplied through the PSTN 24 to the base station 23. The subscriber's number signal supplied through the terminal 30 of the base station 23 and the PSTN interface 29 to the pulse/DTMF decoder 33 is decoded by the pulse/DTMF decoder 33 and then supplied to the system control unit 39. It is determined by the system control unit 39 during the searching operation whether or not the same subscriber's number as the subscriber's number thus decoded is stored in the recording medium (not shown) of the storage unit 40. If the same subscriber's number is not stored in the recording medium, then a connection termination control signal for the the PSTN 24 is supplied to the CPU 34 by way of the external control interface 38 and the bus 35. If on the other hand the same subscriber's number as the decoded subscriber's number is stored in the recording medium, then the handset ID code stored in the recording medium of the storage unit 40 is read out together with the subscriber's number and the control signal is supplied through the external control interface 38 and the bus 35 to the CPU 34 together with the subscriber's number. In this way, the base station 23 makes an outgoing call for the telephone terminal in the building 22, i.e., the handset 19b'. Then, if the subscriber is in the building 22 and turns on the communication button or the like of the handset 19b', then a telephone communication between the handset 19b' of the subscriber and the handset 19b of the person who wants to communicate with the subscriber in the housing 21 becomes possible by way of the PSTN interface 29 and the PSTN 24.

After the telephone communication is ended, the connection termination control signal from the system control unit 39 is supplied to the PSTN interface 29 and also supplied to the CPU 34 through the external control interface 38 and the bus 35, for thereby setting the base station 23 in the initial state.

If the communication button or the like of the handset 19b' is not turned on even when the base station 23 calls the handset 19b', then the CPU 34 supplies a signal to the system control unit 39 through the bus 35 and the external control interface 38, whereby the control signal is supplied from the system control unit 39 to the tone generator 32. Then, the audio signal (e.g., human voice, a signal sound or the like) is supplied from the tone generator 32 through the PSTN interface 29 and the PSTN 24 to the private base station 19a of the digital cordless telephone 20 installed on the housing 21 and further supplied through the antenna of the private base station 19a to the handset 19b. Thus, the audio signal can be heard by means of the handset 19b and the person who wants to communicate with the subscriber by means of the handset 19b can recognize on the basis of the audio signal that the subscriber is not in the building 22. The response by the audio signal might be carried out as follows: That is, a signal sound is emanated three times, for example, or a voice message representative of the absence of the subscriber in the building 22 might be emanated by means of a synthesized human voice.

As described above, according to this embodiment, the telephone number of the base station 23 and the subscriber's number are given to the subscriber in advance, whereby when the subscriber is in the building 22, the subscriber is given with the telephone number of the base station 23 and the person taught with the subscriber's number can communicate with the subscriber. Therefore, the incoming call can be received without registering the position nor utilizing a telephone apparatus of large scale. This telephone system can provide an inexpensive telephone communication even when a cellular type portable telephone is used. Further, if this telephone system is effected, then a particular, i.e., so-called private information service for the subscribers can be realized.

Operation in which the subscriber accepts a particular information service in the building 22.

Also in this case, the base station 23 reads out a handset ID code, to which a particular information is transmitted, from the subscriber's number stored in the memory unit 40.

Further, the system controller 39 controls the memory unit 40 and reads out a service information from the memory unit 40.

Then, an outgoing operation command is supplied from the system controller 39 through the external control interface 38 and the bus 35 to the CPU 34 together with the handset ID code.

The CPU 34 supplies the communication controller 31 with a predetermined outgoing signal having the handset ID code added thereto. This outgoing signal is supplied to the CODEC 28, in which it is encoded. The outgoing signal thus encoded by the CODEC 28 is converted into a predetermined format by the TDMA/TDD circuit 27 and transmitted from the antenna 24 through the MODEM 26 and the tuner 25. When the subscriber sets the handset 19b' in the communication mode after the outgoing signal is transmitted, a control signal representative of the completion of connection is supplied to the system control unit 39 from the CPU 34 through the bus 35 and the external control interface 38. Then, the system control unit 39 supplies the information read out from the memory unit 40 to the handset 19b' through the external control interface 38, the bus 35, the communication control unit 31, the CODEC 28, the TDMA/TDD circuit 27, the MODEM 26, the tuner 25 and the antenna 24. Therefore, the subscriber can hear a desired information by a simple procedure.

Further, If the handset 19b' is still in use or the handset 19b' does not answer after the handset 19b' is continuously called for a predetermined period of time, then the outgoing call operation is interrupted temporarily and then the outgoing call operation is repeated one more time after a predetermined time. The method of repeating the outgoing call operation one more time after the predetermined time might be effected by the program stored in the system control unit 39, for example.

The program might be a method and content in which a plurality of subscribers are divided into several ranks and the above informations are provided in correspondence with the ranks. Further, a microphone or the like might be coupled to the system control unit 39 so that, upon emergency, live informations other than informations stored in the storage medium of the memory unit 40 can be offered to the subscribers.

As described above, according to this embodiment, the telephone number of the base station 23 and the subscriber's number are given to the subscribers in advance, whereby when the subscriber is in the building 22, the person who is taught the telephone number of the base station 23 and the subscriber's number by the subscriber can communicate with the subscriber. Therefore, the incoming call can be received without registering the position nor utilizing a telephone apparatus of large scale. This telephone system can provide an inexpensive telephone communication even when a cellular type portable telephone is used. Further, if this telephone system is effected, then a particular service for the subscribers can be realized.

Furthermore, according to this embodiment, since the subscriber in the building 22 can receive particular information service by using the handset 19b' (this is also true for the cellular type cordless telephone) of the subscriber's digital cordless telephone 20 or by the handset prepared in advance within the building 22, for example, different services proper to various subscriber groups, fruitful services or the like can be offered to the subscribers. Also, since such service is offered to every subscriber, a private information of a certain subscriber can be offered secretly and the private information of subscriber can be prevented from being leaked to other persons.

## Claims

1. A telephone system, comprising:
(a) a telephone apparatus (20) connected to a public switched telephone network;
(b) a base station (23) connected to said public switched telephone network and having memory means (40) which stores at least one subscriber number and a corresponding handset ID; and
(c) at least one cordless handset (19b') having a particular handset ID code and being assigned to a particular subscriber number;
wherein said base station (23) is adapted to transmit a request signal to said telephone apparatus (20) after having been called by said telephone apparatus (20), thereby requesting inputting of a particular subscriber number by a user of said telephone apparatus (20) and transmission of said particular subscriber number via said public switched telephone network;
wherein said base station (23) is adapted to determine whether said particular subscriber number is stored in said memory means (40) after having received said particular subscriber number via said public switched telephone network; and
wherein said base station (23) is adapted to read said ID code corresponding to said particular subscriber number from said memory means (40) after having recognized that said particular subscriber number is stored in said memory means (40) and establish a connection between said base station (23) and a particular handset (19b') corresponding to said particular subscriber number and said ID code by sending said ID code to said particular handset (19b'), thereby enabling a communication between said telephone apparatus (20) and said particular handset (19b').

2. A telephone system according to claim 1,
wherein said base station (23) includes a central processing unit (34) for managing the determining operation, the reading operation and the sending operating to said particular handset (19b') of said base station (23).

3. A telephone system according to claim 1 or 2,
wherein said memory means (40) of said base station (23) further stores message information; and
wherein said base station (23) is adapted to transmit said message information to said particular handset (19b') together with said ID code, when said particular handset (19b') is ready for receiving said message information.

## Patentansprüche

1. Telefonsystem, mit:
a) einem Telefonapparat (20), der mit einem öffentlichen Telefonvermittlungsnetz verbunden ist,
b) einer Basisstation (23), die mit einem öffentlichen Telefonvermittlungsnetz verbunden ist und eine wenigstens eine Teilnehmernummer und einen korrespondierenden Handapparat-ID speichernde Speichereinrichtung (40) aufweist, und
c) wenigstens einem schnurlosen Handapparat (19b'), der wenigstens einen Handapparat-ID-Code aufweist und einer speziellen Teilnehmernummer zugeordnet ist,
wobei die Basisstation (23) so ausgebildet ist, daß sie, nachdem sie vom Telefonapparat (20) angerufen worden ist, ein Anforderungssignal zum Telefonapparat (20) sendet und dabei von einem Benutzer des Telefonapparats (20) die Eingabe einer speziellen Teilnehmernummer und die Übertragung der speziellen Teilnehmernummber über das öffentliche Telefonvermittlungsnetz verlangt,
wobei die Basisstation (23) so ausgebildet ist, daß sie feststellt, ob nach Empfang der speziellen Teilnehmernummer über das öffentlich geschaltete Telefonvermittlungsnetz die spezielle Teilnehmernummer in der Speichereinrichtung (40) gespeichert ist, und
wobei die Basisstation (23) so ausgebildet ist, daß sie, nachdem sie erkannt hat, daß die spezielle Teilnehmernummber in der Speichereinrichtung (40) gespeichert ist, den mit der speziellen Teilnehmernummer korrespondierenden ID-Code aus der Speichereinrichtung liest und eine Verbindung zwischen der Basisstation (23) und einem mit der speziellen Teilnehmernummer und dem ID-Code korrespondierenden speziellen Handapparat (19b') durch Senden des ID-Codes zum speziellen Handapparat (19b') herstellt, wodurch eine Kommunikation zwischen dem Telefonapparat (20) und dem speziellen Handapparat (19b') ermöglicht ist.

2. Telefonsystem nach Anspruch 1,
wobei die Basisstation (23) eine zentrale Verarbeitungseinheit (34) zum Managen der Feststellungsoperation, der Leseoperation und der Sendeoperation bezüglich des speziellen Handapparats (19b') der Basisstation (23) aufweist.

3. Telefonsystem nach Anspruch 1 oder 2,
wobei die Speichereinrichtung (40) der Basisstation (23) eine Nachrichteninformation speichert, und
wobei die Basisstation (23) so ausgebildet ist, daß sie die Nachrichteninformation zusammen mit dem ID-Code zum speziellen Handapparat (19b') sendet, wenn der spezielle Handapparat (19b') zu einem Empfang der Nachrichteninformation bereit ist.

## Revendications

1. Système téléphonique, comportant :
(a) un appareil téléphonique (20) connecté à un réseau téléphonique commuté public ;
(b) une station de base (23) reliée audit réseau téléphonique commuté public et possédant des moyens de mémoire (40) qui mémorisent au moins un numéro d'abonné et un code ID de combiné correspondant ; et
(c) au moins un combiné sans fil (19b') possédant un code de combiné particulier ID et étant affecté à un numéro d'abonné particulier ;
dans lequel ladite station de base (23) est apte à émettre un signal de demande audit appareil téléphonique (20) après avoir été appelée par ledit appareil téléphonique (20), demandant ainsi l'introduction d'un numéro d'abonné particulier par un utilisateur dudit appareil téléphonique (20) et la transmission dudit numéro d'abonné particulier par l'intermédiaire dudit réseau téléphonique commuté public;
dans lequel ladite station de base (23) est apte à déterminer si ledit numéro d'abonné particulier est mémorisé dans lesdits moyens de mémoire (40) après avoir reçu ledit numéro d'abonné particulier par l'intermédiaire dudit réseau téléphonique commuté public ; et
dans lequel ladite station de base (23) est apte à lire ledit code ID correspondant audit numéro d'abonné particulier desdits moyens de mémoire (40) après avoir reconnu que ledit numéro d'abonné particulier est mémorisé dans lesdits moyens de mémoire (40) et à établir une connexion entre ladite station de base (23) et un combiné particulier (19b') correspondant audit numéro d'abonné particulier et audit code ID en émettant ledit code ID vers ledit combiné particulier (19b'), en permettant ainsi une communication entre ledit appareil téléphonique (20) et ledit combiné particulier (19b').

2. Système téléphonique selon la revendication 1, dans lequel ladite station de base (23) comprend une unité de traitement centrale (34) pour gérer l'opération de détermination, l'opération de lecture et l'opération d'émission vers ledit combiné particulier (19b') de ladite station de base (23).

3. Système téléphonique selon la revendication 1 ou 2, caractérisé en ce que lesdits moyens de mémoire (40) de ladite station de base (23) mémorisent en outre une information de message ; et dans lequel ladite station de base (23) est apte à émettre ladite information de message vers ledit combiné particulier (19b') conjointement avec ledit code ID, lorsque ledit combiné particulier (19b') est prêt à recevoir ladite information de message.
